# EUROPÄISCHE PATENTSCHRIFT

(11) **EP 2 498 576 B1**
(45) Veröffentlichungstag und Bekanntmachung des Hinweises auf die Patenterteilung: **02.08.2017**
(21) Anmeldenummer: 12156339.9
(22) Anmeldetag: 21.02.2012
(51) Int. Cl.: H05B 6/12

(54) **Schaltungsträger für ein Induktionskochfeld, auf welchem Elektronikkomponenten angeordnet sind, sowie Induktionskochfeld mit einem Schaltungsträger**
Switch holder for an induction hob, on which electronics components are assembled and induction hob with a switch holder
Porte-circuit pour un champ de cuisson à induction sur lequel sont agencés des composants électroniques, ainsi que champ de cuisson à induction doté d'un porte-circuit

(30) Priorität: 10.03.2011 ES 201130325
(43) Veröffentlichungstag der Anmeldung: 12.09.2012
(73) Patentinhaber: BSH Hausgeräte GmbH, 81739 München (DE)
(72) Erfinder: Anton Falcon, Daniel, 50010 Zaragoza (ES); Cros Querol, David, 50003 Zaragoza (ES); Lorente Perez, Alfonso, 50019 Zaragoza (ES); Ortiz Sainz, David, 50298 Pinseque (Zaragoza) (ES); Pallares Zaera, Oscar, 50018 Zaragoza (ES); Pina Gadea, Carmelo, 50008 Zaragoza (ES)

(56) Entgegenhaltungen:
- EP-A1- 1 954 097
- DE-A1- 10 163 839
- US-A- 5 847 369

## Beschreibung

Die Erfindung betrifft einen Schaltungsträger für ein Induktionskochfeld, auf welchem Elektronikkomponenten angeordnet sind, mit welchem eine Mehrzahl von Induktoren des Induktionskochfelds betreibbar sind, wobei der Schaltungsträger elektrische Leistungsanschlüsse zur Energieversorgung der Induktoren aufweist. Des Weiteren betrifft die Erfindung ein Induktionskochfeld mit einem Schaltungsträger, der zur Energieversorgung der Induktoren des Induktionskochfelds ausgebildet ist.

Induktionskochfelder umfassen in der Regel eine Mehrzahl von Induktoren, die mit elektrischer Energie versorgt werden. Bei bekannten Ausgestaltungen von Induktionskochfeldern sind dabei eine Mehrzahl von separaten Schaltungsträgern vorgesehen. Jeder der Schaltungsträger versorgt dabei nur einige, jedoch nicht alle Induktoren des Induktionskochfelds mit Energie. Eine derartige Ausgestaltung ist zum einen sehr bauraumintensiv, darüber hinaus auch bauteilintensiv. Nicht zuletzt ist durch diese Ausgestaltung das Konzept der Energieversorgung aufwändig und im Steuerungsablauf komplex.

Die EP 954 097 A1 offenbart ein Verfahren zum Aufbau eines Induktionskochfeldes.

Die DE 101 63 839 A1 offenbart eine Induktionskochmulde.

Die US 5,847,369 offenbart einen auswechselbaren Induktionskocheinsatz zur Verwendung mit Bimetallschaltern.

Es ist Aufgabe der vorliegenden Erfindung, einen Schaltungsträger für ein Induktionskochfeld sowie ein derartiges Induktionskochfeld zu schaffen, mit welchem bzw. bei welchem die Energieversorgung der Induktoren aufwandsärmer und einfacher in der Verschaltung erfolgen kann.

Diese Aufgabe wird durch einen Schaltungsträger, welcher die Merkmale nach Anspruch 1 aufweist, und ein Induktionskochfeld, welches die Merkmale nach Anspruch 6 aufweist, gelöst.

Ein erfindungsgemäßer Schaltungsträger für ein Induktionskochfeld umfasst Elektronikkomponenten, mit welchen eine Mehrzahl von Induktoren des Induktionskochfelds betreibbar ist. Die Elektronikkomponenten können dabei Bauteile zur Steuerung und/oder Regelung der Induktoren aufweisen. Ebenso können zusätzlich auch Bauteile zur Auswertung von Signalen vorgesehen sein. Die oben angegebene Funktionalität von Elektronikkomponenten, die auf dem Schaltungsträger angeordnet sein können, ist diesbezüglich nicht abschließend zu verstehen, sondern es können auch andere Elektronikbauteile darauf angeordnet sein, die noch mit anderen Funktionalitäten ausgebildet sind.

Der Schaltungsträger weist elektrische Leistungsanschlüsse zur Energieversorgung der Induktoren auf. Dies bedeutet, dass über diese Anschlüsse eine elektrische Verbindung zu den Induktoren herstellbar ist, so dass diese Induktoren dann mit elektrischer Energie über diese Leistungsanschlüsse versorgt werden können.

Zumindest ein erster Leistungsanschluss ist in einem zu einem ersten Rand sich erstreckenden Flächendrittel der Fläche des Schaltungsträgers angeordnet. Zumindest ein zweiter Leistungsanschluss ist in einem zu einem zum ersten Rand gegenüberliegenden zweiten Rand sich erstreckenden Flächendrittel der Fläche des Schaltungsträgers angeordnet. Es wird also ein Schaltungsträger bereitgestellt, der quasi in gegenüberliegenden Flächenbereichen jeweils zumindest einen Leistungsanschluss aufweist. Durch eine derartige Ausgestaltung wird quasi mit einem Schaltungsträger erreicht, dass mehrere Induktoren, die insbesondere in gegenüberliegenden Zonen der Fläche des Induktionskochfelds angeordnet sind, mit elektrischer Energie versorgt werden können. Durch die örtlich ganz spezifische Positionierung der Leistungsanschlüsse auf diesem einen Schaltungsträger wird eine sehr bauraumminimierte als auch bauteilminimierte Ausgestaltung geschaffen. Darüber hinaus ist die Verschaltung und der Anschluss der auch relativ weit voneinander beabstandeten Induktoren mit den unterschiedlichen Leistungsanschlüssen an dem einen Schaltungsträger auch durch sehr kurze Leitungsverbindungen gewährleistet. Auch dadurch kann Bauraum und Material eingespart werden.

Vorzugsweise ist vorgesehen, dass in jedem Flächendrittel der Fläche des Schaltungsträgers jeweils mehrere Leistungsanschlüsse angeordnet sind und diese jeweils in einer Reihe zueinander positioniert sind. Der Leitungsanschluss und damit die elektrische Verbindung zu mehreren Induktoren ist dadurch besonders einfach und vorteilhaft möglich, so dass sehr kurze Signalleitungen verwendet werden können und ein sehr aufgeräumter Aufbau des Schaltungsträgers insbesondere im Hinblick mit den Verbindungen zu den Induktoren gewährleistet ist.

Vorzugsweise ist vorgesehen, dass die Leistungsanschlüsse in einem Flächendrittel auf gleicher Höhe entlang der Ränder betrachtet zu den Leistungsanschlüssen in dem anderen Flächendrittel angeordnet sind. Es wird dadurch quasi eine gewisse Symmetrie erzeugt, die die elektrotechnische Handhabung im Hinblick auf die Verschaltung und die Anschlüsse besonders einfach macht.

Vorzugsweise ist vorgesehen, dass die Leistungsanschlüsse in zumindest einem Flächendrittel zurückversetzt zum benachbarten Rand, insbesondere den das Flächendrittel begrenzenden Rand, angeordnet sind. Die mechanische Befestigung der Leistungsanschlüsse ist dadurch besonders stabil und robust möglich. Insbesondere im Hinblick auf die Anbringung der elektrischen Leitungen ist dies vorteilhaft.

Des Weiteren betrifft die Erfindung ein Induktionskochfeld mit einem Schaltungsträger gemäß der Erfindung oder einer vorteilhaften Ausgestaltung davon.

In besonderer Vorteilhaftigkeit ist vorgesehen, dass das Induktionskochfeld nur einen einzigen derartigen Schaltungsträger mit den Leistungsanschlüssen für alle Induktoren aufweist. Die Bauteilminimierung als auch der deutlich minimierte Platzbedarf ist dabei hervorzuheben. Es sind somit quasi alle Leistungsanschlüsse, die für das Induktionskochfeld mit ihren Induktoren zur Energieversorgung der Induktoren erforderlich sind, somit auf diesem einzigen Schaltungsträger angeordnet.

Vorzugsweise ist vorgesehen, dass die Leistungsanschlüsse auf der der Induktoren zugewandten Oberseite des Schaltungsträgers angeordnet sind. Die Verdrahtung mit den Induktoren ist dadurch besonders einfach und mit kurzem Weg ausgebildet. Gerade bei Montage und Wartungsarbeiten ist somit auch für das entsprechende Personal die Verbindungsstrecke von dem Induktor zu dem Leistungsanschluss vollständig einsehbar, wodurch auch hier somit eine gegebenenfalls leichtere Fehleranalyse und eine leichtere Montage und Demontage erfolgen kann, die darüber hinaus auch dann fehlerfrei gewährleistet ist.

Vorzugsweise ist vorgesehen, dass Induktoren, die mit Leistungsanschlüssen in einem Flächendrittel des Schaltungsträgers elektrisch verbunden werden, an ihrem äußeren Seitenrand eine Einbuchtung eines Induktorträgers aufweisen, über welche dann die elektrischen Leitungen zwischen dem Induktor und den Leistungsanschlüssen geführt sind. Durch diese Nutnische bzw. Einbuchtung kann auch hier somit sehr platzsparend und auch geschützt vor Einknickungen oder Einklemmungen das Verlegen der Verbindungsleitungen gewährleistet werden.
Vorzugsweise ist vorgesehen, dass die in einer an einen ersten Rand angrenzenden ersten Flächenhälfte des Induktionskochfelds angeordneten Induktoren mit dem im ersten Flächendrittel angeordneten und näher liegenden Leistungsanschlüssen verbunden sind, und die in einer an einen dem ersten Rand gegenüberliegenden zweiten Rand angrenzenden zweiten Flächenhälfte des Induktionskochfelds angeordneten Induktoren mit dem anderen Flächendrittel angeordneten und diesen näher liegenden Leistungsanschlüssen verbunden sind. Die oben genannten Vorteile können dadurch in besonderer Weise erzielt werden.
Weitere Merkmale der Erfindung ergeben sich aus den Ansprüchen, den Figuren und der Figurenbeschreibung. Ein Ausführungsbeispiel der Erfindung wird nachfolgend anhand schematischer Zeichnungen näher erläutert. Es zeigen:
- Fig. 1: eine Draufsicht auf ein geöffnetes Induktionskochfeld, so dass ein Ausführungsbeispiel eines darin angeordneten erfindungsgemäßen Schaltungsträgers einsehbar ist;
- Fig. 2: eine Draufsicht auf das Induktionskochfeld gemäß Fig. 1 mit zur Seite geklappten Induktoren; und
- Fig. 3: eine Draufsicht auf das Induktionskochfeld gemäß Fig. 1 mit den in ihren Endlagen positionierten Induktoren.

In den Figuren werden gleiche oder funktionsgleiche Elemente mit den gleichen Bezugszeichen versehen.

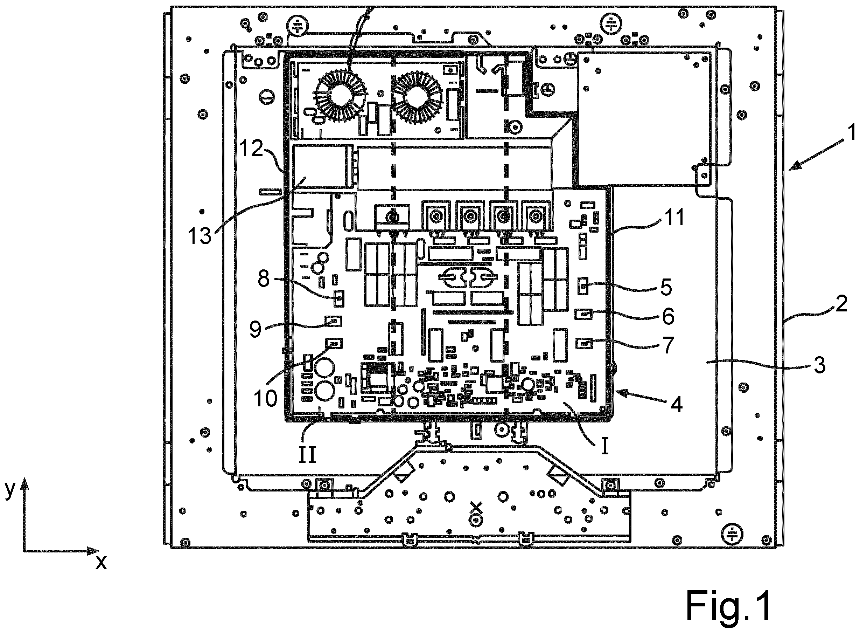

In Fig. 1 ist ein Induktionskochfeld 1 gezeigt, wobei die Draufsicht dargestellt ist und das Innere des Induktionskochfelds 1 einsehbar ist. Dies bedeutet, dass die Kochfeldplatte, welche beispielsweise aus Glaskeramik ausgebildet sein kann, entfernt ist. Das Induktionskochfeld 1 umfasst eine wannenartige Aufnahme 2, in der auf einem Träger 3 ein Schaltungsträger 4 angeordnet ist. Die Platine bzw. der Schaltungsträger 4 umfasst eine Vielzahl von Elektronikkomponenten, die nicht näher bezeichnet werden sollen. Insbesondere ist auch die Leistungselektronik auf dem Schaltungsträger 4 angebracht. Der Schaltungsträger 4 ist zur elektrischen Energieversorgung von Induktoren des Induktionskochfels 1 vorgesehen bzw. zur Leitung der elektrischen Energie von einer Energiequelle zu den Induktoren ausgebildet.

Das Induktionskochfeld 1 umfasst lediglich einen einzigen Schaltungsträger 4, auf dem alle elektronischen Leistungsanschlüsse 5, 6, 7, 8, 9 und 10 für alle Induktoren angeordnet sind. Die Anzahl der Leistungsanschlüsse 5 bis 10 ist lediglich beispielhaft. Dieser Schaltungsträger 4 ist als Leistungsversorgungs-Schaltungsträger zu bezeichnen.

Wesentlich ist, dass die Leistungsanschlüsse 5 bis 7 von einem ersten Rand 11 betrachtet in einem ersten Flächendrittel I positioniert sind und die weiteren Leistungsanschlüsse 8 bis 10 in einem gegenüberliegenden Flächendrittel II, welches an einen zum ersten Rand 11 gegenüberliegenden zweiten Rand 12 des Schaltungsträgers 4 angrenzt, angeordnet sind. Die Abgrenzung der Flächendrittel der gesamten Fläche des Schaltungsträgers 4 ist beispielhaft durch die in y-Richtung verlaufenden strichlierten Linien gekennzeichnet.

Die jeweils drei Leistungsanschlüsse 5 bis 10 liegen somit an gegenüberliegenden Seiten des Schaltungsträgers 4 und sind auf einer Oberseite 13, die den Induktoren zugewandt ist, angeordnet.

Wie des Weiteren aus der Darstellung in Fig. 1 zu entnehmen ist, sind in der Höhe (Erstreckung in y-Richtung) die Leistungsanschlüsse 5 bis 7 auf gleicher Höhe zu den Leistungsanschlüssen 8 bis 10 angeordnet. Des Weiteren ist gezeigt, dass im Ausführungsbeispiel die Leistungsanschlüsse 5 bis 7 in y-Richtung in einer Reihe angeordnet sind, und analog dazu auch die Leistungsanschlüsse 8 bis 10 in y-Richtung in einer Reihe zueinander angeordnet sind.

Darüber hinaus ist im Ausführungsbeispiel vorgesehen, dass die Leistungsanschlüsse 5 bis 7 nach innen versetzt zum Rand 11 angeordnet sind und entsprechendes bei den Leistungsanschlüssen 8 bis 10 gegenüber dem Rand 12 vorgesehen ist.

Die Anzahl der Leistungsanschlüsse 5 bis 10 in den jeweiligen Flächendrittel I und II kann auch variieren und ist abhängig von der Anzahl der vorhandenen Induktoren des Induktionskochfelds.

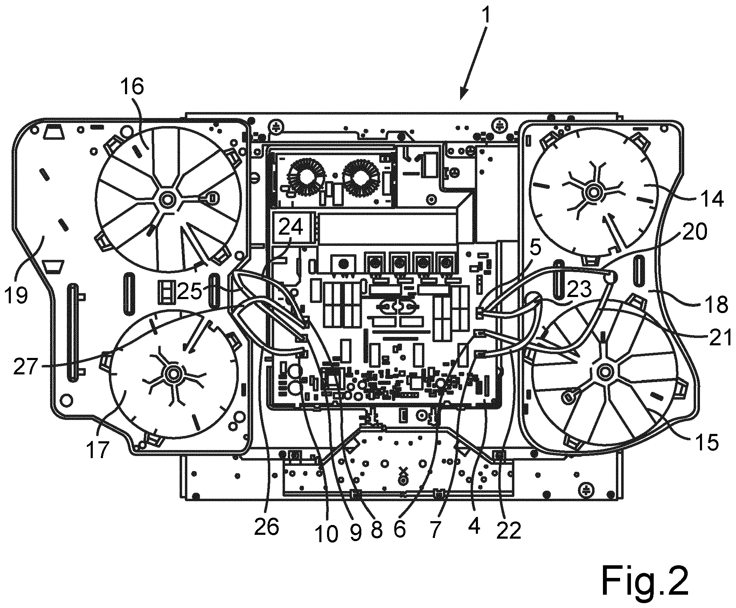

In Fig. 2 ist eine weitere Draufsicht auf das Induktionskochfeld 1 gezeigt, wobei hier die Induktoren 14, 15, 16 und 17 dargestellt sind. Diese sind paarweise auf Induktionsträgern 18 und 19 angeordnet.

In der Darstellung gemäß Fig. 2 sind diese Induktionsträger 18 und 19 nach außen geklappt, so dass die Induktoren 14 bis 17 quasi von unten gezeigt sind und somit von der im verbauten Zustand dem Schaltungsträger 4 zugewandten Seite zu erkennen sind. Dazu ist zu erkennen, dass die Induktoren 14 und 15, die in verbauter örtlicher Lage benachbart zu den rechten Leistungsanschlüssen 5, 6 und 7 angeordnet sind, auch nur mit diesen Leistungsanschlüssen 5 bis 7 verbunden sind. Dazu sind elektrische Leitungen 20, 21, 22 und 23 vorgesehen.

Analog sind die Induktoren 16 und 17 nur mit den Leistungsanschlüssen 8, 9 und 10 elektrisch verbunden, wobei dazu elektrische Leitungen 24, 25, 26 und 27 vorgesehen sind.

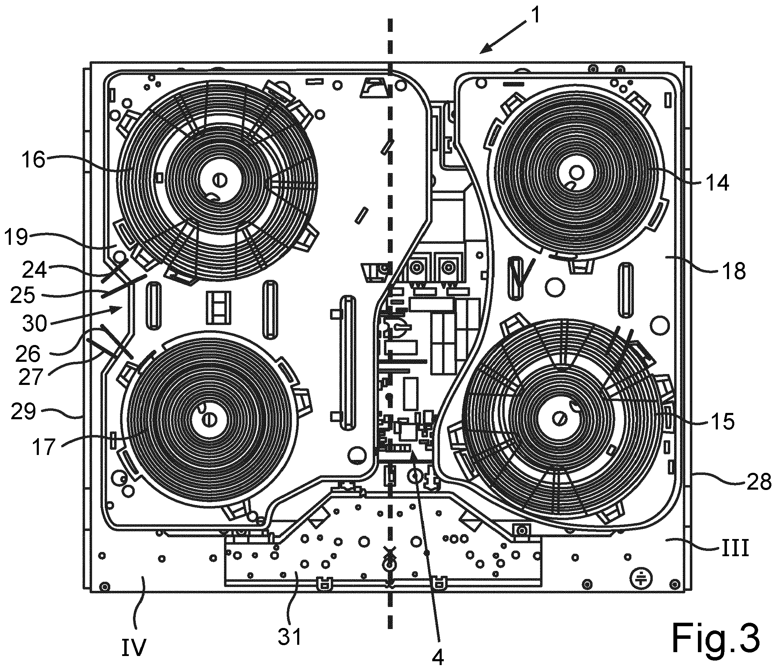

In der Darstellung gemäß Fig. 3 ist wiederum eine Draufsicht auf das Induktionskochfeld 1 gezeigt, wobei in diesem Zustand die Induktoren 14 bis 17 in ihrer Endlage positioniert sind und somit von oben zu erkennen sind. Dies bedeutet dass die Induktorenträger 18 und 19 gegenüber der Darstellung in Fig. 2 umgedreht und somit quasi nach innen geklappt wurden. Es sei an dieser Stelle nochmals erwähnt, dass die Induktoren 14 und 15 in einer rechten Flächenhälfte III des Induktionskochfelds 1 angeordnet sind, wobei sich diese Flächenhälfte III zu einem Rand 28 begrenzend hinerstreckt und dieser Rand 28 quasi parallel zum Rand 11 des Schaltungsträgers 4 sich erstreckt. Dies bedeutet quasi, dass bei einer Draufsicht gemäß Fig. 3 die Leistungsanschlüsse 5 bis 7 im ersten Flächendrittel I sich innerhalb der Fläche III befinden. Analog befinden sich die Induktoren 16 und 17 in einem zweiten Flächendrittel IV des Induktionskochfelds 1. Auch hier sind die Leistungsanschlüsse 8 bis 10 mit ihrem Flächendrittel II, indem sie sich befinden, innerhalb der Fläche IV, die sich begrenzend bis zum Rand 29, der dem Rand 28 gegenüber liegt, erstreckt, angeordnet.

Wie aus der Darstellung aus Fig. 3 zu entnehmen ist, weist zumindest ein Induktorenträger, hier der Induktorenträger 19, eine randseitige Einbuchtung 30 auf, durch welche sich die Leitungen 24 bis 27 erstrecken.

Wie aus den Darstellungen in Fig. 1 und Fig. 2 des Weiteren zu erkennen ist, ist der einzige Schaltungsträger 4, der für die elektrische Energieversorgung der Induktoren 14 bis 17 vorgesehen ist, im Wesentlichen zentral und mittig im Hinblick auf die Ausmaße des Induktionskochfelds 1 angeordnet.

Darüber hinaus ist ein weiterer Schaltungsträger 31 vorgesehen, der jedoch lediglich der Bedieneinheit des Induktionskochfelds 1 zugeordnet ist und somit Signale im Hinblick auf die Bedienung umfasst. Dieser weitere Schaltungsträger 31 ist mit dem Leistungsversorgungs-Schaltungsträger 4 elektrisch verbunden, wobei insbesondere vorgesehen ist, dass die Signale ausgetauscht werden und dann anhand der verarbeiteten Informationen über die Elektronik auf dem Schaltungsträger 4 die Steuerung der Induktoren 14 bis 17 erfolgt.

### Bezugszeichenliste

- 1: Induktionskochfeld
- 2: Aufnahme
- 3: Träger
- 4: Schaltungsträger
- 5, 6, 7, 8, 9, 10: Leistungsanschlüsse
- 11: erster Rand
- 12: zweiter Rand
- 13: Oberseite
- 14, 15, 16, 17: Induktoren
- 18, 19: Induktionsträger
- 20, 21, 22, 23, 24, 25, 26, 27: elektrische Leitungen
- 28, 29: Rand
- 30: Einbuchtung
- 31: Schaltungsträger

## Patentansprüche

1. Schaltungsträger (4) für ein Induktionskochfeld (1), auf welchem Elektronikkomponenten angeordnet sind, mit welchen eine Mehrzahl von Induktoren (14 bis 17) des Induktionskochfelds (1) betreibbar ist, wobei der Schaltungsträger (4) Leistungsanschlüsse (5 bis 10) zur Energieversorgung der Induktoren (14 bis 17) aufweist, **dadurch gekennzeichnet, dass** zumindest ein erster Leistungsanschluss (5 bis 7) in einem zu einem ersten Rand (11) sich erstreckenden Flächendrittel (I) der Fläche des Schaltungsträgers (4) angeordnet ist und zumindest ein zweiter Leistungsanschluss (8 bis 10) in einem zu einem zum ersten Rand (11) gegenüberliegenden zweiten Rand (12) sich erstreckenden Flächendrittel (II) der Fläche des Schaltungsträgers (4) angeordnet ist.

2. Schaltungsträger (4) nach Anspruch 1, **dadurch gekennzeichnet, dass** in jedem Flächendrittel (I, II) jeweils mehrere Leistungsanschlüsse (5 bis 10) angeordnet sind und diese jeweils in einer Reihe zueinander angeordnet sind.

3. Schaltungsträger (4) nach Anspruch 1 oder 2, **dadurch gekennzeichnet, dass** die Leistungsanschlüsse (5 bis 10) in einem Flächendrittel (I, II) auf gleicher Höhe entlang der Ränder (11, 12) betrachtet zu den Leistungsanschlüssen (5 bis 10) in dem anderen Flächendrittel (I, II) angeordnet sind.

4. Schaltungsträger (4) nach einem der vorhergehenden Ansprüche, **dadurch gekennzeichnet, dass** die Leistungsanschlüsse (5 bis 10) in zumindest einem Flächendrittel (I, II) zurückversetzt zum benachbarten Rand (11, 12) angeordnet sind.

5. Schaltungsträger (4) nach Anspruch 4, **dadurch gekennzeichnet, dass** die Leistungsanschlüsse (5 bis 10) in der Breite eines Flächendrittels (I, II) betrachtet in etwa der Mitte des Flächendrittels (I, II) angeordnet sind.

6. Induktionskochfeld (1) mit einem Schaltungsträger (4) nach einem der vorhergehenden Ansprüche.

7. Induktionskochfeld (1) nach Anspruch 6, welches nur einen einzigen derartigen Schaltungsträger (1) mit der Leistungsversorgungsfunktion für die Induktoren (14 bis 17) aufweist, und alle Leistungsanschlüsse (5 bis 10) für alle Induktoren (14 bis 17) an dem Schaltungsträger (1) angeordnet sind.

8. Induktionskochfeld (1) nach Anspruch 6 oder 7, bei welchem die Leistungsanschlüsse (5 bis 10) auf der den Induktoren (14 bis 17) zugewandten Oberseite (13) des Schaltungsträgers (4) angeordnet sind.

9. Induktionskochfeld (1) nach einem der Ansprüche 6 bis 8, bei welchem die in einer an einen ersten Rand (28) angrenzenden ersten Flächenhälfte (III) des Induktionskochfelds (1) angeordneten Induktoren (14, 15) mit den im ersten Flächendrittel (I) angeordneten und näher liegenden Leistungsanschlüssen (5 bis 7) verbunden sind, und die in einer an einen dem ersten Rand (28) gegenüberliegenden zweiten Rand (29) angrenzenden zweiten Flächenhälfte (IV) des Induktionskochfelds (1) angeordneten Induktoren (14 bis 17) mit den im anderen Flächendrittel (II) angeordneten und näher liegenden Leistungsanschlüssen (8 bis 10) verbunden sind.

10. Induktionskochfeld nach einem der Ansprüche 6 bis 9, bei welchem ein weiterer zum ersten Leistungsversorgungs-Schaltungsträger (4) separater Schaltungsträger (31) angeordnet ist, welcher ohne Leistungsversorgungsfunktion für die Induktoren (14 bis 17) ausgebildet ist, insbesondere einer Bedieneinrichtung des Induktionskochfelds (1) zugeordnet ist.

## Claims

1. Circuit carrier (4) for an induction hob (1), on which electronics components are arranged, with which a plurality of inductors (14 to 17) of the induction hob (1) are able to be operated, wherein the circuit carrier (4) has power terminals (5 to 10) for the energy supply of the inductors (14 to 17), **characterised in that** at least one first power terminal (5 to 7) is arranged in a surface third (I) of the surface of the circuit carrier (4) extending to a first edge (11) and at least one second power terminal (8 to 10) in a surface third (II) of the surface of the circuit carrier (4) extending to a second edge (12) lying opposite the first edge (11).

2. Circuit carrier (4) according to claim 1, **characterised in that** in each case a plurality of power terminals (5 to 10) are arranged in each surface third (I, II) and said power terminals (5 to 10) are arranged in each case in series with each other.

3. Circuit carrier (4) according to claim 1 or 2, **characterised in that** the power terminals (5 to 10) in one surface third (I, II), when viewed along the edges (11, 12), are arranged at the same height as the power terminals (5 to 10) in the other surface third (I, II).

4. Circuit carrier (4) according to one of the preceding claims, **characterised in that** the power terminals (5 to 10) in at least one surface third (I, II) are arranged such that they are set back towards the adjacent edge (11, 12).

5. Circuit carrier (4) according to claim 4, **characterised in that** the power terminals (5 to 10), when viewed in the width of a surface third (I, II), are arranged approximately in the centre of the surface third (I, II).

6. Induction hob (1) with a circuit carrier (4) according to one of the preceding claims.

7. Induction hob (1) according to claim 6, which has only a single circuit carrier (1) of this kind with the power supply function for the inductors (14 to 17), and all power terminals (5 to 10) for all inductors (14 to 17) are arranged on the circuit carrier (1).

8. Induction hob (1) according to claim 6 or 7, in which the power terminals (5 to 10) are arranged on the upper side (13) of the circuit carrier (4) facing towards the inductors (14 to 17).

9. Induction hob (1) according to one of claims 6 to 8, in which the inductors (14, 15) arranged in a first surface half (III) of the induction hob (1) bordering a first edge (28) are connected to the power terminals (5 to 7) which are arranged in the first surface third (I) and are closer, and the inductors (14 to 17) arranged in a second surface half (IV) of the induction hob (1) bordering a second edge (29) lying opposite the first edge (28) are connected to the power terminals (8 to 10) which are arranged in the other surface third (II) and are closer.

10. Induction hob according to one of claims 6 to 9, in which a further circuit carrier (31) separate from the first power supply circuit carrier (4) is arranged, which circuit carrier (31) is embodied without a power supply function for the inductors (14 to 17), in particular of an operating facility of the induction hob (1).

## Revendications

1. Porte-circuit (4) pour une plaque de cuisson à induction (1) sur laquelle sont disposés des composants électroniques à l'aide desquels une pluralité d'inducteurs (14 à 17) de la plaque de cuisson par induction (1) peut fonctionner, le porte-circuit (4) présentant des raccordements de puissance (5 à 10) pour l'alimentation en énergie des inducteurs (14 à 17), **caractérisé en ce qu'**au moins un premier raccordement de puissance (5 à 7) est disposé dans un tiers de surface (1), s'étendant vers un premier bord (11), de la surface du porte-circuit (4) et **en ce qu'**au moins un deuxième raccordement de puissance (8 à 10) est disposé dans un tiers de surface (II), s'étendant vers un deuxième bord (12) opposé au premier bord (11), de la surface du porte-circuit (4).

2. Porte-circuit (4) selon la revendication 1, **caractérisé en ce que** respectivement plusieurs raccordements de puissance (5 à 10) sont disposés dans chaque tiers de surface (I, II) et **en ce que** ceux-ci sont respectivement disposés en une rangée les uns par rapport aux autres.

3. Porte-circuit (4) selon la revendication 1 ou 2, **caractérisé en ce que** les raccordements de puissance (5 à 10) sont disposés dans un tiers de surface (I, II) en vue à même hauteur le long des bords (11, 12) vers les raccordements de puissance (5 à 10) situés dans l'autre tiers de surface (I, II).

4. Porte-circuit (4) selon l'une quelconque des revendications précédentes, **caractérisé en ce que** les raccordements de puissance (5 à 10), dans au moins un tiers de surface (I, II), sont disposés en étant décalés par rapport au bord adjacent (11, 12).

5. Porte-circuit (4) selon la revendication 4, **caractérisé en ce que** les raccordements de puissance (5 à 10), en vue dans la largeur d'un tiers de surface (I, II), sont disposés à peu près au milieu du tiers de surface (I, II).

6. Plaque de cuisson à induction (1) comprenant un porte-circuit (4) selon l'une quelconque des revendications précédentes.

7. Plaque de cuisson à induction (1) selon la revendication 6, laquelle présente uniquement un seul tel porte-circuit (1) ayant la fonction d'alimentation en puissance pour les inducteurs (14 à17), et dans laquelle tous les raccordements de puissance (5 à 10) pour tous les inducteurs (14 à 17) sont disposés sur le porte-circuit (4).

8. Plaque de cuisson à induction (1) selon la revendication 6 ou 7, dans laquelle les raccordements de puissance (5 à 10) sont disposés sur le côté supérieur (13) du porte-circuit (4), tourné vers les inducteurs (14 à 17).

9. Plaque de cuisson à induction (1) selon l'une quelconque des revendications 6 à 8, dans laquelle les inducteurs (14, 15) disposés dans une moitié de surface (III) de la plaque de cuisson à induction (1), adjacente à un premier bord (28), sont reliés aux raccordements de puissance (5 à 7) disposés dans le premier tiers de surface (I) et situés plus près, et dans laquelle les inducteurs (14 à 17) disposés dans une deuxième moitié de surface (V) adjacente à un deuxième bord (29) opposé au premier bord (28) sont reliés aux raccordements de puissance (8 à 10) disposés dans l'autre tiers de surface (II) et situés plus près.

10. Plaque de cuisson à induction (1) selon l'une quelconque des revendications 6 à 9, dans laquelle un porte-circuit supplémentaire (31) séparé du premier porte-circuit (4) d'alimentation en puissance est disposé, lequel est réalisé sans fonction d'alimentation en puissance pour les inducteurs (14 à 17), lequel est notamment attribué à un dispositif de commande de la plaque de cuisson à induction (1).
